Europäisches Patentamt

European Patent Office

Office européen des brevets

(19)

(11) **EP 1 646 100 A2**

(12) **DEMANDE DE BREVET EUROPEEN**

(43) Date de publication:
**12.04.2006 Bulletin 2006/15**

(51) Int Cl.:
*H01M 8/04* [(2006.01)]     *H01M 8/06* [(2006.01)]

(21) Numéro de dépôt: 05300803.3

(22) Date de dépôt: **07.10.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **11.10.2004  FR 0410699**

(71) Demandeur: **Renault s.a.s.**
**92100 Boulogne Billancourt (FR)**

(72) Inventeurs:
• **Bencherif, Karim**
  **75019 PARIS (FR)**
• **Le Lay, Vincent**
  **78114 MAGNY-LES-HAMEAUX (FR)**

(54) **Dispositif et procédé de commande d'une quantité de carburant injectée dans un reformeur de système de pile à combustible embarqué à bord d'un véhicule automobile**

(57)     Dispositif de commande d'une quantité de carburant injectée dans un reformeur (2) de système de pile à combustible embarqué sur un véhicule automobile comprenant un groupe de compression d'air pour alimenter en air la pile à combustible (1) et une unité de commande électronique (4). L'unité de commande électronique (4) comprend :

- un estimateur (8) du débit d'hydrogène ($Q_{H_2}^{est}$) en sortie du reformeur (2) à partir de paramètres d'entrée comprenant des données délivrées à la pile (1) ou fournies par la pile (1) ; et
- des moyens de commande (10) de la quantité de carburant ($Q_{Carb}$) injectée dans le reformeur (2).

## FIG.1

EP 1 646 100 A2

**Description**

La présente invention concerne un dispositif et un procédé de commande d'une quantité de carburant injectée dans un reformeur de système de pile à combustible embarqué sur un véhicule automobile.

Les piles à combustible sont utilisées pour fournir de l'énergie soit pour des applications stationnaires, soit dans le domaine aéronautique ou automobile.

Les véhicules automobiles équipés d'un système de pile à combustible comprenant un reformeur pour alimenter la pile en hydrogène doivent pouvoir disposer rapidement d'énergie électrique lorsqu'une importante puissance est demandé par le conducteur. Il est alors nécessaire que l'alimentation de la pile en hydrogène évolue rapidement.

Pour cela il est important de pouvoir estimer précisément la quantité d'hydrogène fournie à la pile par le reformeur, notamment pour pouvoir commander l'injection de carburant dans le reformeur en fonction des besoins de la pile en hydrogène.

Il existe des systèmes d'estimation de la quantité d'hydrogène fournie par un reformeur de système de pile à combustible.

Les documents US 2003/0043159 et JP 2003/095607 décrivent des dispositifs pour estimer la concentration en hydrogène dans un gaz de reformat produit par un reformeur de pile à combustible à partir de données mesurées concernant le reformeur.

Il est utilisé des données mesurées concernant le reformeur, et non dans la pile à combustible. Un bon nombre de capteurs supplémentaires est alors nécessaire, ce qui a un coût élevé.

Selon un aspect de l'invention, il est proposé un Dispositif de commande d'une quantité de carburant injectée dans un reformeur de système de pile à combustible embarqué sur un véhicule automobile comprenant un groupe de compression d'air pour alimenter en air la pile à combustible et une unité de commande électronique. L'unité de commande électronique comprend :

- un estimateur du débit d'hydrogène en sortie du reformeur à partir de paramètres d'entrée comprenant des données délivrées à la pile ou fournies par la pile; et
- des moyens de commande de la quantité de carburant injectée dans le reformeur.

Il est alors possible d'estimer de manière précise le débit d'hydrogène en sortie du reformeur à partir de paramètres d'entrée comprenant des données délivrées à la pile ou fournies par la pile. On peut alors éviter la présence d'un capteur de mesure de la quantité d'hydrogène en sortie du reformeur.

Dans un mode de réalisation préféré, lesdites données délivrées à la pile ou fournies par la pile comprennent le débit d'alimentation en air de la pile, la pression d'alimentation en air de la pile, la température de la pile, la tension électrique aux bornes de la pile, et l'intensité électrique fournie par la pile, lesdites données délivrées à la pile ou fournies par la pile étant mesurées par des capteurs ou estimées par des moyens d'estimation.

Ces données sont généralement déjà mesurées ou estimées, et sont donc déjà disponibles sans avoir besoin d'ajouter un capteur supplémentaire.

Avantageusement, lesdits moyens de commande de la quantité de carburant injectée dans le reformeur comprennent des paramètres d'entrée comprenant un débit d'hydrogène désiré en sortie du reformeur et le débit d'hydrogène en sortie du reformeur estimé par l'estimateur.

La quantité de carburant injectée dans le reformeur est alors gérée en fonction du débit d'hydrogène désiré en sortie du reformeur, et du débit d'hydrogène en sortie du reformeur estimé.

Dans un mode de réalisation préféré, l'estimateur comprend en outre un filtre passe-bande adapté pour filtrer ladite tension aux bornes de la pile, et en ce que l'estimateur est adapté pour calculer le débit d'hydrogène en sortie du reformeur à partir dudit filtrage de ladite tension et desdites données délivrées à la pile ou fournies par la pile.

Ce filtrage permet d'extraire du signal représentant la tension électrique aux bornes de la pile, l'effet de l'hydrogène, car le monoxyde de carbone influe également sur la tension électrique aux bornes de la pile. Or ces deux phénomènes ont des fréquences de coupure différentes.

Dans un autre mode de réalisation, l'estimateur est adapté pour estimer le débit d'hydrogène en sortie du reformeur en résolvant un système d'équations vectorielles faisant intervenir le temps et lesdites données délivrées à la pile ou fournies par la pile.

Selon un autre aspect de l'invention, il est également proposé un procédé de commande d'une quantité de carburant injectée dans un reformeur de système de pile à combustible embarqué sur un véhicule automobile. On estime le débit d'hydrogène en sortie du reformeur à partir de paramètres d'entrée comprenant des données délivrées à la pile ou fournies par la pile, et on commande la quantité de carburant injectée dans le reformeur.

Dans un mode de mise en oeuvre préféré, lesdites données délivrées à la pile ou fournies par la pile comprennent le débit d'alimentation en air de la pile, la pression d'alimentation en air de la pile, la température de la pile, la tension électrique aux bornes de la pile, et l'intensité électrique fournie par la pile, lesdites données délivrées à la pile ou fournies par la pile étant mesurées par des capteurs ou estimées par des moyens d'estimations.

Avantageusement, ladite commande de la quantité de carburant injectée dans le reformeur dépend de paramètres d'entrée comprenant un débit d'hydrogène désiré en sortie du reformeur et le débit estimé d'hydrogène en sortie du reformeur.

Dans un mode de mise en oeuvre préféré, ladite estimation comprend en outre un filtrage par filtre passe-bande pour filtrer ladite tension aux bornes de la pile, et un calcul du débit d'hydrogène en sortie du reformeur à partir dudit filtrage de ladite tension et desdites données délivrées à la pile ou fournies par la pile.

Dans un autre mode de mise en oeuvre, on estime le débit d'hydrogène en sortie du reformeur en résolvant un système d'équations vectorielles faisant intervenir le temps et lesdites données délivrées à la pile ou fournies par la pile.

L'invention a pour but de déterminer avec précision le débit d'hydrogène en sortie d'un reformeur de dispositif de pile à combustible, et d'en déduire une commande de la quantité de carburant à injecter pour alimenter le reformeur.

D'autres buts, caractéristiques et avantages de l'invention apparaîtront à la lecture de la description suivante, de quelques exemples nullement limitatifs, et faite en référence aux dessins annexés sur lesquels :

- la figure 1 est un schéma synoptique d'un dispositif selon l'invention ;
- la figure 2 est un schéma illustrant une mise en oeuvre du procédé selon l'invention ;
- la figure 3 est un schéma synoptique illustrant un premier mode de réalisation d'un estimateur d'un dispositif selon l'invention.
- la figure 4 est un schéma synoptique illustrant un second mode de réalisation d'un estimateur d'un dispositif selon l'invention.

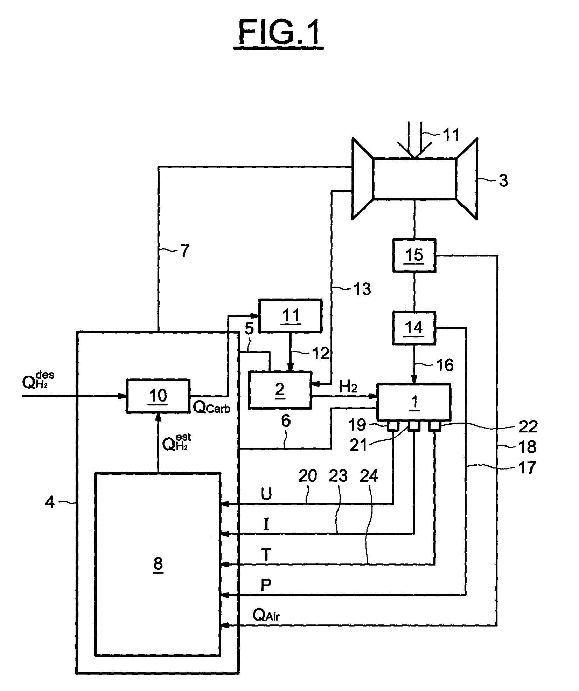

La figure 1 représente un dispositif selon l'invention, embarqué dans un véhicule automobile. Le dispositif comprend une pile à combustible 1, et un reformeur 2 pour alimenter en hydrogène la pile à combustible 1.

Le dispositif comprend également un groupe de compression d'air 3, qui alimente en oxygène, généralement sous forme d'air comprimé, la pile à combustible 1. Le dispositif comprend en outre une unité de commande électronique 4, utilisée également pour d'autres buts tels que le contrôle de stabilité du véhicule ou du freinage, connectée au reformeur 2, à la pile à combustible 1 et au groupe de compression d'air 3 respectivement par des connexions 5, 6, et 7.

L'unité de commande électronique 4 comprend un estimateur 8 du débit d'hydrogène $Q_{H_2}^{est}$ en sortie 9 du reformeur 2, et des moyens de commande 10 de la quantité ou débit de carburant $Q_{Carb}$ injectée dans le reformeur 2, par exemple par un réservoir de carburant 11 alimentant le reformeur 2 par un conduit d'alimentation 12. Le groupe de compression d'air 3 est alimenté en air par une alimentation en air 11.

Le reformeur 2 est alimenté en air par le groupe de compression d'air 3 au moyen d'un conduit 13.

Le dispositif comprend en outre un capteur de pression 14 et un débitmètre 15 pour mesurer respectivement la pression P et le débit $Q_{Air}$ de l'alimentation en air 16 de la pile à combustible 2. Le capteur de pression 14 et le débitmètre 15 sont respectivement reliés à l'unité de commande électronique 4 par des connexions 17 et 18. Le dispositif comprend également un capteur 19 de la tension électrique U aux bornes de la pile 2 relié à l'unité de commande électronique 4 par une connexion 20. Le dispositif comprend en outre un capteur 21 de l'intensité fournie par la pile 2 et un capteur 22 de la température de la pile 2, respectivement reliés à l'unité de commande électronique 4 par des connexions 23 et 24.

Dans une variante de réalisation, ces capteurs peuvent être remplacés par des dispositifs d'estimation de ces données en fonction de paramètres déjà disponibles.

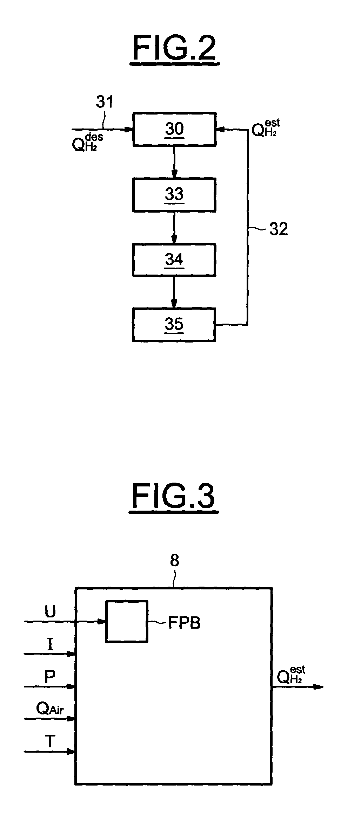

Lors d'une étape 30, représentée sur la figure 2, les moyens de commande 10 de la quantité de carburant injectée dans le reformeur 2 gèrent l'alimentation en carburant du reformeur 2, en fonction du débit d'hydrogène $Q_{H_2}^{est}$ en sortie du reformeur 2 estimé par l'estimateur 8 et du débit d'hydrogène désiré $Q_{H_2}^{des}$, au moyen d'un algorithme connu de l'homme du métier.

Le débit d'hydrogène désiré est, par exemple, fourni par une cartographie mémorisée du débit d'hydrogène nécessaire en sortie du reformeur 2, ou, en d'autres termes, en entrée de la pile à combustible 2, en fonction de paramètres tenant compte de la conduite du conducteur du véhicule 1.

Les moyens de commande 10 effectuent cette gestion de la quantité de carburant $Q_{Carb}$ injectée dans le reformeur 2 à partir du débit d'hydrogène $Q_{H_2}^{des}$ désiré en sortie du reformeur 2, amené à l'entrée 31 de l'étape 30, et du débit d'hydrogène $Q_{H_2}^{des}$ en sortie du reformeur 2, estimé par l'estimateur 8, et ramené par la branche de retour 32 à l'étape 30.

Après avoir traité ces débits d'hydrogène estimé $Q_{H_2}^{est}$ et désiré $Q_{H_2}^{des}$ (étape 30), les moyens de commande 10 commandent, lors d'une étape 33, un nouveau débit d'injection de carburant dans le reformeur 2 de valeur égale au débit de carburant résultant de l'étape 30.

Puis, lors d'une étape 34, l'unité de commande électronique 4 effectue de nouvelles mesures au niveau de la pile à combustible 2, au moyen des capteurs 14, 15, 19, 21 et 22. On a alors de nouvelles mesures de la pression P et du débit $Q_{Air}$ de l'alimentation 16 en air de la pile à combustible 2, ainsi que de la tension électrique U aux bornes de la pile 2, de l'intensité électrique I fournie par la pile 2, et de la température de la pile 2.

Enfin, lors d'une étape 35, l'estimateur 8 fournit aux moyens de commande 10 une estimation du débit d'hydrogène $Q_{H_2}^{est}$ en sortie du reformeur 2.

La figure 3 illustre un premier mode réalisation d'un estimateur 8 selon l'invention. Les données d'entrée de l'estimateur comprennent le débit $Q_{Air}$ d'alimentation en air de la pile 2, la pression P d'alimentation en air de la pile 2, la température T de la pile 2, la tension électrique U aux bornes de la pile 2, et l'intensité électrique I fournie par la pile 2.

En sortie de l'estimateur 8, l'estimation $Q_{H_2}^{est}$ du débit d'hydrogène en sortie du reformeur 2 est fournie aux moyens de commande 10.

La courbe de polarisation (U(t)) de la pile à combustible 2 dépend d'effets dus au monoxyde de carbone et d'effets dus au hydrogène. Les effets du monoxyde de carbone CO, comme l'empoisonnement de la pile, sont très lents, tandis que les effets de l'hydrogène, comme sa consommation dans la pile 2 sont quasiment instantanés. Les fréquences de coupure des fréquences de ces deux phénomènes sont donc distinctes. L'utilisation d'un filtre passe-bande FPB appliqué au signal représentant la tension U aux bornes de la pile 2 permet d'isoler les effets dus à l'hydrogène, en fonction de la dynamique d'influence de l'hydrogène, et d'en déduire une estimation du débit d'hydrogène en sortie du reformeur 2 à partir de la courbe de polarisation.

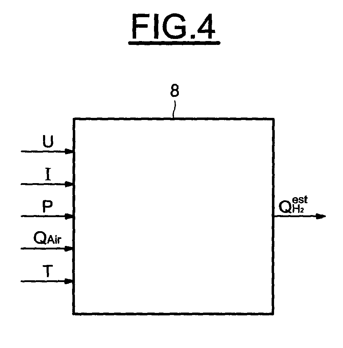

La figure 4 décrit un deuxième mode de réalisation de l'estimateur 8 selon l'invention. Par rapport à la figure 3, l'estimateur 8 ne filtre plus la tension U aux bornes de la pile 2 avec un filtre passe-bande, mais utilise un modèle représentant le fonctionnement du module de puissance, dans lequel on considère le vecteur suivant :

$$X = {}^t\left[P \; ; Q_{O_2} \; ; T \; ; Q_{H_2} \; ; X_{CO} \; ; U\right]$$

et on a :

$$\begin{cases} \dfrac{dX}{dt} = f(X,I) \\ Y = C\,X \end{cases}$$

dans lequel :

Y représente un vecteur de mesure, et C représente un vecteur dont chaque composante vaut 0 ou 1 en fonction de l'existence ou non de la composante du vecteur X. Par exemple, si on ne dispose que d'un capteur de pression, alors, pour le vecteur X, on a C = [1;0;0;0;0;0], et la mesure sera Y = [P]

P est la pression de l'alimentation en air de la pile 2, en

Pa ;

$Q_{O_2}$ est le débit d'alimentation en oxygène de la pile 2, en g/s ;

T est la température de la pile 2, en K ; et

$Q_{H_2}$ est le débit d'alimentation en hydrogène de la pile 2, en g/s ; ;

$X_{CO}$ est la fraction molaire en monoxyde de carbone en entrée de l'anode de la pile 2, adimensionnelle ; et

U est la tension électrique aux bornes de la pile 2, en V.

On construit alors un vecteur X d'estimation du vecteur X de la manière suivante :

$$\begin{cases} \dfrac{d\hat{X}}{dt} = f\left(\hat{X}, I\right) + K\left(Y - \hat{Y}\right) \\ \hat{Y} = C\hat{X} \end{cases}$$

où K est une matrice ou une fonction non linéaire de son argument choisie de façon à assurer la convergence de l'erreur e = X - $\hat{X}$, entre le système réel et l'estimation, vérifiant l'équation :

$$\frac{de}{dt} = f\left(\hat{X} + e, I\right) - f\left(\hat{X}, I\right) - KCe.$$

Lorsque l'erreur e converge vers 0, $\hat{X}$ converge vers X. Cette estimation permet de calculer encore plus précisément le débit d'hydrogène en sortie du reformeur 2.

Le débit $Q_{O_2}$ et la fraction molaire XCO sont établies à partir des données d'entrée de l'estimateur 8.

L'invention permet d'estimer le débit d'hydrogène en sortie d'un reformeur de système de pile à combustible, et d'utiliser cette estimation pour commander l'injection de carburant dans le reformeur.

## Revendications

1. Dispositif de commande d'une quantité de carburant injectée dans un reformeur (2) de système de pile à combustible embarqué sur un véhicule automobile comprenant un groupe de compression d'air (3) pour alimenter en air la pile à combustible (1) et une unité de commande électronique (4), **caractérisé en ce que** l'unité de commande électronique (4) comprend :

- un estimateur (8) du débit d'hydrogène $\left(Q_{H_2}^{est}\right)$ en sortie du reformeur (2) à partir de paramètres d'entrée comprenant des données délivrées à la pile (1) ou fournies par la pile (1) ;

et

- des moyens de commande (10) de la quantité de carburant ($Q_{Carb}$) injectée dans le reformeur (2).

**2.** Dispositif selon la revendication 1, **caractérisé en ce que** lesdites données délivrées à la pile (1) ou fournies par la pile (1) comprennent le débit ($Q_{Air}$) d'alimentation en air de la pile (1), la pression (P) d'alimentation en air de la pile (2), la température (T) de la pile (1), la tension électrique (U) aux bornes de la pile (1), et l'intensité électrique (I) fournie par la pile (1), lesdites données délivrées à la pile (1) ou fournies par la pile (1) étant mesurées par des capteurs ou estimées par des moyens d'estimation.

**3.** Dispositif selon la revendication 1 ou 2, **caractérisé en ce que** lesdits moyens de commande (10) de la quantité de carburant ($Q_{Carb}$) injectée dans le reformeur (2) comprennent des paramètres d'entrée comprenant un débit d'hydrogène désiré $\left( Q_{H_2}^{des} \right)$ en sortie du reformeur (2) et le débit d'hydrogène $\left( Q_{H_2}^{est} \right)$ en sortie du reformeur (2) estimé par l'estimateur (8).

**4.** Dispositif selon la revendication 2 ou 3, **caractérisé en ce que** l'estimateur (8) comprend en outre un filtre passe-bande (FPB) adapté pour filtrer ladite tension (U) aux bornes de la pile (1), et **en ce que** l'estimateur (8) est adapté pour calculer le débit d'hydrogène $\left( Q_{H_2}^{est} \right)$ en sortie du reformeur (2) à partir dudit filtrage de ladite tension (U) et desdites données délivrées à la pile (1) ou fournies par la pile (1).

**5.** Dispositif selon la revendication 2 ou 3, **caractérisé en ce que** l'estimateur (8) est adapté pour estimer le débit d'hydrogène $\left( Q_{H_2}^{est} \right)$ en sortie du reformeur (2) en résolvant un système d'équations vectorielles faisant intervenir le temps et lesdites données délivrées à la pile (1) ou fournies par la pile (1).

**6.** Procédé de commande d'une quantité de carburant injectée dans un reformeur (2) de système de pile à combustible embarqué sur un véhicule automobile, **caractérisé en ce que** :

- on estime le débit d'hydrogène $\left( Q_{H_2}^{est} \right)$ en sortie du reformeur (2) à partir de paramètres d'entrée comprenant des données délivrées à la pile (1) ou fournies par la pile (1) ; et
- on commande la quantité de carburant ($Q_{Carb}$) injectée dans le reformeur (2).

**7.** Procédé selon la revendication 6, **caractérisé en ce que** lesdites données délivrées à la pile (1) ou fournies par la pile (1) comprennent le débit ($Q_{Air}$) d'alimentation en air de la pile (1), la pression (P) d'alimentation en air de la pile (1), la température (T) de la pile (1), la tension électrique (U) aux bornes de la pile (1), et l'intensité électrique (I) fournie par la pile (1), lesdites données délivrées à la pile (1) ou fournies par la pile (1) étant mesurées par des capteurs ou estimées par des moyens d'estimations.

**8.** Procédé selon la revendication 6 ou 7, **caractérisé en ce que** ladite commande de la quantité de carburant ($Q_{carb}$) injectée dans le reformeur (2) dépend de paramètres d'entrée comprenant un débit d'hydrogène désiré $\left( Q_{H_2}^{des} \right)$ en sortie du reformeur (2) et le débit estimé d'hydrogène $\left( Q_{H_2}^{est} \right)$ en sortie du reformeur (2).

**9.** Procédé selon la revendication 7 ou 8, **caractérisé en ce que** ladite estimation comprend en outre un filtrage par filtre passe-bande (FPB) pour filtrer ladite tension (U) aux bornes de la pile (1), et un calcul du débit d'hydrogène $\left( Q_{H_2}^{est} \right)$ en sortie du reformeur (2) à partir dudit filtrage de ladite tension (U) et desdites données délivrées à la pile (1) ou fournies par la pile (1).

**10.** Procédé selon la revendication 8, **caractérisé en ce que** l'on estime le débit d'hydrogène $\left( Q_{H_2}^{est} \right)$ en sortie du reformeur (2) en résolvant un système d'équations vectorielles faisant intervenir le temps et lesdites données délivrées à la pile (1) ou fournies par la pile (1).

# FIG.1

## FIG.2

31

$$Q_{H_2}^{des}$$

$$\boxed{\underline{30}}$$

$$Q_{H_2}^{est}$$

$$\boxed{\underline{33}}$$

32

$$\boxed{\underline{34}}$$

$$\boxed{\underline{35}}$$

## FIG.3

8

U

I → □ — FPB

P

$$Q_{Air}$$

T

$$Q_{H_2}^{est}$$

7

# FIG.4

8

U →
I →
P →
$Q_{Air}$ →
T →

$Q_{H_2}^{est}$ →